# EUROPÄISCHE PATENTSCHRIFT

(11) **EP 4 211 327 B1**
(45) Veröffentlichungstag und Bekanntmachung des Hinweises auf die Patenterteilung: **28.08.2024**
(21) Anmeldenummer: 21745897.5
(22) Anmeldetag: 13.07.2021
(51) Int. Cl.: E05B 81/80, E05B 81/20, B60L 1/00

(54) **AUFSTELLVORRICHTUNG FÜR EIN KRAFTFAHRZEUGTÜRELEMENT**
OPENING DEVICE FOR A MOTOR VEHICLE DOOR ELEMENT
DISPOSITIF D'OUVERTURE POUR UN ÉLÉMENT DE PORTE DE VÉHICULE AUTOMOBILE

(30) Priorität: 10.09.2020 DE 102020123596
(43) Veröffentlichungstag der Anmeldung: 19.07.2023
(73) Patentinhaber: Kiekert Aktiengesellschaft, 42579 Heiligenhaus (DE)
(72) Erfinder: EGGERT, Marco, 40235 Düsseldorf (DE)
(74) Vertreter: Kiekert AG Patentabteilung
(86) Internationale Anmeldenummer: PCT/DE2021/100612
(87) Internationale Veröffentlichungsnummer: WO 2022/053096

(56) Entgegenhaltungen:
- WO-A1-2013/103953
- DE-A1- 102012 004 000
- DE-A1- 102018 100 551
- DE-B3- 102019 105 594
- DE-U1- 202017 104 564

## Beschreibung

Die Erfindung betrifft eine Aufstellvorrichtung für ein Kraftfahrzeugtürelement, insbesondere eine Seitentür, aufweisend ein elektrisch betätigbares Türschloss, eine elektrische Antriebseinheit, ein Stellmittel und eine Steuereinheit, wobei mittels der Steuereinheit ein Betriebsmodus auswählbar ist.

Heutige Kraftfahrzeuge werden mehr und mehr mit Komfortfunktionen versehen. Um beispielsweise das Einsteigen in ein Kraftfahrzeug zu erleichtern und Einfluss auf die ästhetische wie auch aerodynamische Formgebung des Kraftfahrzeugs nehmen zu können, werden die Fahrzeuge zum Beispiel ohne einen äußeren Türgriff ausgestattet. Vorstellbar ist es aber auch, dass ein Türaußengriff vorgesehen ist, dieser aber zum Öffnen lediglich ein Schaltsignal an das Kraftfahrzeugtürschloss weiterleitet. Um das Einsteigen zu erleichtern, zu automatisieren und bei türaußengrifflosen Fahrzeugen das Einsteigen zu ermöglichen, kommen sogenannte Aufstellvorrichtungen bzw. Türaufsteller zum Einsatz, die zum Teil auch als Türaussteller bezeichnet sind.

Aus der DE 10 2017 129 527 A1 ist ein Verfahren und eine Vorrichtung zum Erkennen einer Nutzeraktion an einer Tür eines Kraftfahrzeugs bekannt geworden. Der Tür ist ein Aktor zum Halten der Tür zugeordnet zum Erfassen einer Position der Tür relativ zu dem Kraftfahrzeug ausgeführt, wobei das Verfahren zum Erkennen der Nutzerinteraktion zumindest die Schritte "Halten der Tür" relativ zu dem Kraftfahrzeug durch den Aktor in einer Halteposition, Prüfen, ob aus der Halteposition eine Änderung der Position der Tür pro vordefinierter Zeiteinheit größer oder gleich einem vordefinierten Schwellwert als Nutzerinteraktion erfolgt ist und bejahendenfalls Freigeben der Tür durch den Aktor umfasst.

In der DE 10 2019 126 590 A1 ist ein Verfahren zum Steuern eines mechatronischen Systems zum Aufstellen, Halten oder Zuziehen eines schwenkbeweglich an einem Kraftfahrzeug angeordneten Türelements offenbart, mit den Verfahrensschritten Aktivieren des Systems, Prüfen einer Nutzerbedingung, Auswählen eines Betriebsmodus, Abfrage einer Deaktivierung des Systems und Abfragen, ob eine Abbruchbedingung erfüllt ist. Das bekannte Verfahren beschreibt den Ablauf und die Zustände bzw. Betriebsmodi während des Aufstellens des Türelements. Insbesondere wird dabei in jedem Abfragezyklus geprüft, ob eine Abbruchbedingung vorliegt, so dass ein Aufstellen des Türelements unterbrechbar oder abbrechbar ist.

In der DE202017104564U1 wird ein Fahrzeugtürsystem offenbart, umfassend: eine Türstruktur, die beweglich zwischen einer geschlossenen Position und einer vollständig geöffneten Position ist; ein rahmenloses Türglassystem, das einen ersten elektrisch angetriebenen Aktor beinhaltet, der betätigt werden kann, um ein Glasfenster zwischen geöffneten und geschlossenen Positionen zu bewegen; eine angetriebene Verriegelung, die einen zweiten elektrisch angetriebenen Aktor, der zum Entriegeln der angetriebenen Verriegelung betätigt werden kann, beinhaltet; einen angetriebenen Türpräsentierer mit einem dritten elektrisch angetriebenen Aktor, der betätigt werden kann, um ein Drückelement auszufahren, um die Türstruktur aus der geschlossenen Position in eine teilweise geöffnete Position, die zwischen der geschlossenen Position und der vollständig geöffneten Position liegt, zu verschieben; einen angetriebenen Türöffnungsmechanismus mit einem vierten elektrisch angetriebenen Aktor, der zum Verschieben der Türstruktur aus der teilweise geöffneten Position in eine vollständig geöffnete Position betätigt werden kann; einen angetriebenen Türschutz mit einem Schutzelement, das beweglich an der Türstruktur befestigt ist, und einen fünften elektrisch angetriebenen Aktor, der betätigt werden kann, um das Schutzelement beim Öffnen der Türstruktur von einer eingezogenen Position in eine ausgefahrene Position relativ zu der Türstruktur zu verschieben, um somit zumindest einen Abschnitt der Tür zu schützen; und eine Steuerung, die mit den ersten, zweiten, dritten, vierten und fünften elektrisch angetriebenen Aktoren wirkverbunden ist, wobei die Steuerung für Folgendes ausgelegt ist: Betätigen des ersten elektrisch angetriebenen Aktors, um das Glasfenster aus der geschlossenen Position weg zu verschieben, wenn eine Türfreigabeanfrage von der Steuerung erhalten wird; Betätigen des zweiten elektrisch angetriebenen Aktors, um die angetriebene Verriegelung zu entriegeln; Betätigen des dritten elektrisch angetriebenen Aktors, um die Türstruktur nach dem Betätigen der ersten und zweiten elektrisch angetriebenen Aktoren aus der geschlossenen Position in die teilweise geöffnete Position zu verschieben; Betätigen des vierten elektrisch angetriebenen Aktors nach dem Betätigen des dritten elektrisch angetriebenen Aktors, um die Türstruktur aus der teilweise geöffneten Position in die vollständig geöffnete Position zu verschieben; Betätigen des fünften elektrisch angetriebenen Aktors nach dem Betätigen des dritten elektrisch angetriebenen Aktors, um das Schutzelement aus der eingezogenen Position in die ausgefahrene Position zu verschieben.

In der WO 2013/103953 A1 wird ein System für den Zugang zu einem Fahrzeug offenbart, wenn die Hauptbatterie nicht in der Lage ist, ausreichend Energie für die Betätigung der elektrischen Türschlösser/-verriegelungen des Fahrzeugs zu liefern. Das System umfasst dabei: eine Stromversorgung in der Tür oder dem Entriegelungsgriff, die die elektrische Verriegelung des Fahrzeugs mit Strom versorgt; eine Zugangsauthentifizierungsvorrichtung zum Empfangen einer oder mehrerer Eingaben zur Authentifizierung des Zugangs eines Benutzers zum Fahrzeug, wobei die Zugangsauthentifizierungsvorrichtung von der wiederaufladbaren Stromversorgung gespeist wird; und eine Verriegelungssteuerung, die von der Stromversorgung gespeist wird und betriebsmäßig mit der elektrischen Verriegelung und der mindestens einen Zugangsauthentifizierungsvorrichtung verbunden ist, um Informationen von der Zugangsauthentifizierungsvorrichtung zu empfangen, die der einen oder mehreren Eingaben entsprechen. Die Verriegelungssteuerung kann den Zugang eines Benutzers zum Fahrzeug authentifizieren, um die Verriegelung in einen entriegelten Zustand zu versetzen, so dass die Tür geöffnet werden kann.

Die DE 10 2019 105594 B3 betrifft eine Vorrichtung zur Notbestromung eines Kraftfahrzeugs, das eine über einen Funkschlüssel betätigbare Schließeinrichtung umfasst, die über eine fahrzeuginterne elektrische Energiequelle mit elektrischer Energie versorgt werden kann, und mit einer elektrischen Leitungseinrichtung, über die der Schließeinrichtung bei Bedarf elektrische Energie von einer fahrzeugexternen elektrischen Energiequelle zugeführt werden kann, um durch eine Notbestromung der Schließeinrichtung eine Notentriegelung des Kraftfahrzeugs einzuleiten, wobei die elektrische Leitungseinrichtung als Multifunktionsteil ausgeführt, das zusätzlich zu einer elektrischen Leitungsfunktion zur Notbestromung der Schließeinrichtung mindestens eine zusätzliche Funktion am Kraftfahrzeug ausübt. Um die Notbestromung des Kraftfahrzeugs zu vereinfachen, umfasst die elektrische Leitungseinrichtung für die Notbestromung der Schließeinrichtung in dem Multifunktionsteil mindestens ein elektrisches Kabel das an einer Abdeckeinrichtung, die zum Verschließen einer Öffnung am Kraftfahrzeug dient, eine Fangseilfunktion ausübt.

Die bekannten Systeme zum Aufstellen eines Türelements sind in das Bordnetz des Kraftfahrzeugs eingebunden und werden über das Bordnetz mit Spannung versorgt und gesteuert bzw. geregelt. Problematisch kann es dabei sein, dass im Falle eines Ausfalls der Spannungsversorgung ein automatisches Öffnen nicht länger möglich ist. Dies kann insbesondere dann mit einem Nachteil oder sogar der Gefahr verbunden sein, dass bei grifflosen Türen ein manuelles Öffnen des Türelements nicht mehr möglich ist. Hier setzt die Erfindung an.

Ausgehend von dem bekannten Stand der Technik stellt sich die Aufgabe, eine verbesserte Aufstellvorrichtung bereitzustellen. Insbesondere stellt sich die Aufgabe, eine Aufstellvorrichtung für ein Kraftfahrzeugtürelement bereitzustellen, welches auch in Extremsituationen, wie beispielsweise einem Spannungsabfall oder einem Spannungsausfall die Möglichkeit eröffnet, das Türelement aufzustellen. Darüber hinaus stellt sich die Aufgabe, ein Verfahren bereitzustellen, mit dem ein griffloses Türelement auch im Falle eines Stromabfalls oder Stromausfalls ein Aufstellen des Türelements ermöglicht.

Die Lösung der Aufgabe erfolgt in vorrichtungstechnischer Hinsicht durch die Merkmale des unabhängigen Patentanspruchs 1. In verfahrenstechnischer Hinsicht wird die Aufgabe der Erfindung durch das Verfahren gemäß dem Patentanspruch 8 gelöst.

Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung und den Unteransprüchen sowie den Figuren beschriebenen Merkmale möglich.

Die Aufgabe der Erfindung wird in vorrichtungstechnischer Hinsicht dadurch gelöst, dass eine Aufstellvorrichtung für ein Kraftfahrzeugtürelement, insbesondere eine Seitentür, bereitgestellt wird, aufweisend ein elektrisch betätigbares Türschloss, eine elektrische Antriebseinheit, ein Stellmittel und eine Steuereinheit, wobei mittels der Steuereinheit ein Betriebsmodus auswählbar ist und wobei ein Mittel zur Notstromversorgung an der Aufstellvorrichtung angeordnet ist, wobei mittels der Steuereinheit die Notstromversorgung mit der Aufstellvorrichtung koppelbar ist und eine Legitimierung der Notstromversorgung durchführbar ist. Durch den erfindungsgemäßen Aufbau der Aufstellvorrichtung ist nun die Möglichkeit geschaffen, das Kraftfahrzeugtürelement auch im Falle eines Spannungsabfalls bzw. eines Spannungsausfalls aufstellen zu können. Das Mittel zur Notstromversorgung ermöglicht es hierbei, dass die Aufstellvorrichtung auch dann betätigbar ist, wenn durch das Kraftfahrzeug keine Spannungs- bzw. Stromversorgung mehr gewährleistet werden kann. Ein solcher Zustand kann im Kraftfahrzeug beispielsweise dann auftreten, wenn das Fahrzeug lange gestanden hat, durch eine Fehlbedienung die Stromversorgung ausgefallen ist und/oder aufgrund eines Unfalls keine Stromversorgung mehr zur Verfügung steht. In all diesen Fällen muss der Bediener des Kraftfahrzeugs in der Lage sein, das Kraftfahrzeug bzw. das Türelement zu öffnen. Durch die Einbindung einer Notstromversorgung in die Aufstellvorrichtung besteht dabei die Möglichkeit, die Aufstellvorrichtung unabhängig vom Kraftfahrzeug zu aktivieren und zu betreiben.

Das Kraftfahrzeugtürelement ist bevorzugt eine Seitentür eines Kraftfahrzeugs, die mittels der Aufstellvorrichtung von einer Schließstellung in eine Offenstellung überführbar ist. Vorstellbar ist es aber auch, dass das Kraftfahrzeugtürelement eine Hecktür an einem Kraftfahrzeug oder einem Nutzfahrzeug ist. Mittels der Aufstellvorrichtung ist ein Türelement geringfügig aufstellbar, so dass der Bediener das Türelement ergreifen und vollständig öffnen kann. Üblicherweise sind Stellbewegungen von ca. 100 mm, vorzugsweise 60 mm und noch bevorzugter 45 mm vorgesehen. Wie vorstehend bereits ausgeführt, ist die Aufstellvorrichtung nicht auf ein Kraftfahrzeugtürelement beschränkt, sondern kann auch überall dort eingesetzt werden, wo schwenkbeweglich angeordnete Bauteile am Kraftfahrzeug dem Bediener zugestellt bzw. aufgestellt werden. Dies kann beispielsweise auch eine Abdeckung oder ein Schließfach sein.

Die Aufstellvorrichtung weist ein elektrisch betätigbares Türschloss auf bzw. wirkt mit einem elektrisch betätigbaren Türschloss zusammen. Dabei sind unterschiedliche Ausführungsformen der Aufstellvorrichtung erfindungsgemäß vorstellbar. Einerseits kann die Aufstellvorrichtung in das elektrisch betätigbare Türschloss integriert vorliegen, andererseits kann die Aufstellvorrichtung auch lediglich an das Türschloss angebunden vorliegen. Vorstellbar ist es aber auch, dass das Türschloss und die Aufstellvorrichtung als separate Bauteile an unterschiedlichen Positionen im Kraftfahrzeug angeordnet vorliegen. Ein elektrisch betätigbares Türschloss zeichnet sich dadurch aus, dass im Türschloss ein Gesperre bestehend aus Drehfalle und mindestens einer Sperrklinke vorliegt, die in ein oder zwei Rastpositionen verrastbar sind. Dabei kann die Sperrklinke die Drehfalle in der Rastposition halten und ein elektrischer Antrieb, vorzugsweise ein Gleichstrommotor, kann mittelbar oder unmittelbar die Sperrklinke aus dem Eingriff mit der Drehfalle herausbewegen. Das elektrisch betätigbare Türschloss ist dabei essentiell, da durch den Bediener zur Erhöhung des Komforts der Bedienung des Kraftfahrzeugs lediglich ein Befehl oder Signal gegeben wird, mit dem die Aufstellvorrichtung aktiviert wird. Gibt der Bediener ein Signal, beispielsweise über einen Tastsensor oder eine Funkfernsteuerung, so wird zuerst das elektrisch betätigbare Schloss entsperrt, so dass das Türelement freikommt. Unmittelbar anschließend oder parallel dazu erhält die Aufstellvorrichtung ein Signal, ein Stellmittel zu betätigen, so dass das durch das Türschloss freigegebene Türelement verschwenkbar bzw. verstellbar und aufstellbar ist.

Die Aufstellvorrichtung weist ferner eine elektrische Antriebseinheit und ein Stellmittel auf. Die elektrische Antriebseinheit ist dazu ausgelegt, dass Stellmittel zu betätigen. Mittels der elektrischen Antriebseinheit wird das Stellmittel bevorzugt aus einer Öffnung einer Karosserie herausbewegt, so dass das Stellmittel in der Lage ist, eine Stellbewegung in das Türelement einzuleiten. Hierbei sind lineare wie auch rotatorische Bewegungen des Stellmittels vorstellbar.

Die elektrische Steuereinheit kann als separates Bauteil in der Aufstellvorrichtung angeordnet sein, vorstellbar ist es aber auch und aus Kostengründen vorteilhaft, zur Steuerung der Aufstellvorrichtung die Kraftfahrzeug-inhärente Steuerung zu verwenden. Die Steuerung kann einerseits den Betriebsmodus auswählen und andererseits das Mittel zur Notstromversorgung aktivieren, so dass eine Betätigung der Aufstellvorrichtung und/oder des Türschlosses mittels der Notstromversorgung ermöglichbar ist.

Ist die Notstromversorgung als extern zugängliche Stromversorgung ausgebildet, so ergibt sich eine Ausgestaltungsvariante der Erfindung. Die Ausbildung des Mittels zur Notstromversorgung als extern zugängliche Stromversorgung bietet den Vorteil, dass die Aufstellvorrichtung unabhängig vom Kraftfahrzeug betätigbar ist. Insbesondere kann durch die externe Stromversorgung einerseits das Türschloss elektrisch betätigbar sein und andererseits ein Aufstellen mittels des Stellmittels erfolgen. Dabei kann das Mittel zur Notstromversorgung entweder unmittelbar auf das Türschloss und die Antriebseinheit wirken, es ist aber auch vorstellbar, dass die Notstromversorgung die Steuereinheit mit einem Notstrom versorgt, so dass die Aufstellvorrichtung von der Steuereinheit aus betreibbar ist.

Weiterhin vorteilhaft kann es sein, wenn ein externer Zugang im Bereich einer Klappe, bevorzugt einer Tankklappe und/oder einer Ladesteckdose anordbar ist. Die Aufstellvorrichtung weist als Mittel zur Stromversorgung in dieser Ausführungsvariante einen externen Zugang auf, der auch beabstandet von der Aufstellvorrichtung im Kraftfahrzeug anordbar ist. So kann beispielsweise der externe Zugang im Bereich einer Klappe oder hinter einer Abdeckung angeordnet sein. Auch ist es vorstellbar, dass der externe Zugang zum Beispiel im Bereich eines Türgriffs anordbar ist, wobei beispielsweise der externe Zugang durch ein Ziehen am Türgriff zugänglich wird. Der externe Zugang ermöglicht es dann hierbei, die Notstromversorgung mit der Aufstellvorrichtung zu verbinden. Der externe Zugang kann in unterschiedlichen Formen ausgebildet sein und beispielsweise als genormter Standardstecker, wie beispielsweise einem USB-Stecker, ausgebildet sein. Als Stromversorgung kommen dabei übliche Akkus, Batterien oder auch eine externe Spannungsquelle wie beispielsweise eine Hausstromversorgung in Frage, um lediglich einige Beispiele aufzuführen. Vorstellbar ist es natürlich auch, übliche Geräte wie beispielsweise ein Batterieladegerät oder ein Startergerät einzusetzen.

Erfindungsgemäß ist mittels der Steuereinheit die Notstromversorgung mit der Aufstellvorrichtung koppelbar. Die Notstromversorgung an die Steuereinheit anzuschlie-ßen, bietet den Vorteil, dass die in der Steuereinheit implementierten Steuerprogramme bzw. Steuerungsbefehle zum Ansteuern der Aufstellvorrichtung nutzbar sind. Mit anderen Worten muss die Notstromversorgung lediglich die Stromversorgung bereitstellen, wohingegen die Steuereinheit das Ansteuern des Türschlosses und der elektrischen Antriebseinheit vornimmt.

Erfindungsgemäß ist mittels der Steuereinheit eine Legitimierung der Notstromversorgung durchführbar. Die Notstromversorgung und insbesondere die Ausbildung eines externen Zugangs als Notstromversorgung ermöglicht es dem Bediener, eine Stromversorgung an die Aufstellvorrichtung anzubinden. Nun muss, um beispielsweise auch einem Diebstahl vorzubeugen, die Notstromversorgung legitimiert werden. Eine Legitimierung erfolgt erfindungsgemäß über die Steuereinheit. Erkennt die Steuereinheit beispielsweise einen Spannungsabfall und einen vorgebbaren Schwellwert des Spannungsabfalls, so kann infolge des Spannungsabfalls eine Legitimierung der externen Notstromversorgung erfolgen. Das heißt, im Falle eines Spannungsabfalls erkennt die Steuerung den Schwellwert, in dem die dem Kraftfahrzeug innewohnende Spannungsversorgung einen Wert erreicht, mit dem die Aufstellvorrichtung nicht länger betreibbar ist, so wird das Mittel zur Notstromversorgung aktiviert, so dass eine externe Spannungsversorgung der Aufstellvorrichtung ermöglichbar ist. Entsprechendes gilt für den Fall, dass die Steuereinheit einen Spannungsausfall erkennt. Mit der Erkennung des Spannungsausfalls kann eine Legitimierung der externen Notstromversorgung einhergehen.

Vorstellbar ist es erfindungsgemäß auch, dass die Legitimierung mittels eines externen Steuergeräts, bevorzugt eines Smartphones, einer Smart Device, eines KeyFobs und/oder einer NFC-Karte, durchführbar ist. Das externe Steuergerät greift dabei auf die Aufstellvorrichtung zu und bringt neben der Spannungsversorgung auch gleichzeitig die Legitimierung mit. Somit kann eine Legitimierung durch das externe Gerät und über den externen Zugang erfolgen. Somit ist sichergestellt, dass auch lediglich derjenige Benutzer die Aufstellvorrichtung betätigt und dabei das Türelement aufstellt, der zur Nutzung des Kraftfahrzeugs legitimiert ist.

Weiterhin kann es erfindungsgemäß vorteilhaft sein, wenn die Legitimierung mittels eines Crashsignals durchführbar ist. Kommt es beispielsweise zu einem Unfall, so kann es vorkommen, dass das Fahrzeug von der internen Spannungsversorgung getrennt wird. Wird nun das Crashsignal genutzt, um eine Legitimierung des externen Zugangs bzw. des Mittels zur Notstromversorgung zu aktivieren, so besteht auch im Falle eines Unfalls die Möglichkeit, die Aufstellvorrichtung mittels der Notstromversorgung zu betätigen und folglich das Türelement zu öffnen.

Eine weitere Möglichkeit einer Legitimierung und somit Aktivierung des Mittels zur Notstromversorgung besteht darin, einen Lastschalter zu betätigen. Der Lastschalter kann beispielsweise über eine Funkfernsteuerung aktivierbar oder über die Steuereinheit im Falle eines Stromabfalls aktivierbar sein. Nach dem Aktivieren des Lastschalters kann dann eine Legitimierung über den Lastschalter selbst erfolgen, so dass ein Aufstellen des Türelements mittels der Aufstellvorrichtung ermöglichbar ist. In jedem Fall besteht durch die erfindungsgemäße Aufstellvorrichtung die Möglichkeit, im Falle eines Spannungsabfalls bzw. Spannungsausfalls die Tür aufzustellen und beispielsweise im Falle einer griff losen Tür ein Öffnen des Kraftfahrzeugs zu ermöglichen.

In verfahrenstechnischer Hinsicht wird die Aufgabe der Erfindung dadurch gelöst, dass ein Verfahren zum Aufstellen eines Kraftfahrzeugtürelements, insbesondere eines Türelements ohne Türaußengriff bereitgestellt wird, bei dem im Falle eines Stromabfalls oder eines Stromausfalls eine Notstromversorgung für eine Aufstellvorrichtung gemäß einem der vorstehenden Ansprüche bereitgestellt wird, bei dem erst in Folge einer Legitimierung ein Mittel zur Notstromversorgung aktiviert wird. Durch das erfindungsgemäße Verfahren kann sichergestellt werden, dass nur ein berechtigter Benutzer ein Öffnen des Türelements vornehmen kann. Insbesondere durch die Legitimierung kann dabei sichergestellt werden, dass kein unbefugtes Öffnen des Kraftfahrzeugtürelements erfolgt. Erst durch den Verfahrensschritts des Legitimierens wird das Mittel zur Notstromversorgung aktiviert und ist für den Bediener nutzbar. Wird mittels einer Steuereinheit im Kraftfahrzeug ein Stromabfall detektiert, so wird eine Legitimierung durchgeführt. Vorstellbar ist es erfindungsgemäß aber auch, dass das Verfahren der Legitimierung über ein externes Steuergerät durchgeführt wird. Auch ein Crashsignal kann den Verfahrensschritt des Legitimierens durchführen, wie auch die Legitimierung durch die Aktivierung eines Lastschalters erfolgen kann. In jedem Fall ist gewährleistet, dass durch das erfindungsgemäße Verfahren nur dann ein Betätigen der Aufstellvorrichtung ermöglicht wird, nachdem eine Legitimierung erfolgt ist.

Nachfolgend wird die Erfindung unter Bezugnahme auf die anliegende Zeichnung anhand eines bevorzugten Ausführungsbeispiels näher erläutert. Es gilt jedoch der Grundsatz, dass das Ausführungsbeispiel die Erfindung nicht beschränkt, sondern lediglich eine vorteilhafte Ausgestaltungsform darstellt. Die dargestellten Merkmale können einzeln oder in Kombination mit weiteren Merkmalen der Beschreibung wie auch den Patentansprüchen ausgeführt werden.

Es zeigt:

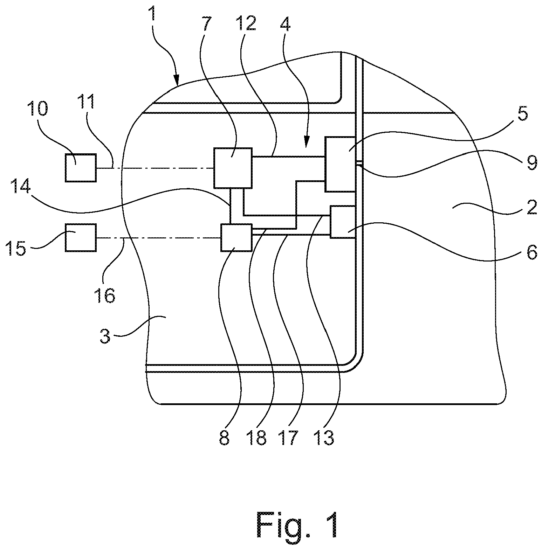

Figur 1 eine prinzipielle Darstellung einer Aufstellvorrichtung mit einem Mittel zur Notstromversorgung als integraler Bestandteil eines Kraftfahrzeugs und in einer prinzipiellen Anordnung in einem Kraftfahrzeug, wobei eine Seitenansicht auf ein Kraftfahrzeugtürelement in einem Kraftfahrzeug wiedergegeben ist.

In der Figur 1 ist eine Seitenansicht auf ein Kraftfahrzeug 1 im Bereich einer Seitenwand 2 und einem Türelement 3 wiedergegeben. Eine Aufstellvorrichtung 4 ist in prinzipieller Form in Bezug auf die Lage im Türelement 3 wiedergegeben.

Die Aufstellvorrichtung 4 weist ein elektrisch betätigbares Türschloss 5, eine Antriebseinheit 6 mit einem Stellmittel, eine Steuereinheit 7 und eine extern zugängliche Stromversorgung 8 auf. Mittels des Türschlosses 5 kann das Türelement 3 im Zusammenspiel mit einem Schlosshalter 9 das Türelement 3 in einer Schließposition halten. Wird nun beispielsweise mittels einer Funkfernsteuerung 10 ein Steuersignal 11 an die Steuereinheit 7 weitergeleitet, so kann über eine Steuerleitung 12 das elektrisch betätigbare Türschloss 5 entsperrt werden, wodurch ein im Inneren des Türschlosses 5 befindliches Gesperre den Schlosshalter 9 freigibt. Das Türelement 3, in diesem Fall eine Seitentür 3 eines Kraftfahrzeugs 1, ist nun frei schwenkbar im Kraftfahrzeug 1 gehalten. Mittels der Antriebseinheit 6 und dem in der Antriebseinheit 6 befindlichen Stellmittel ist nun das Türelement 3 in eine Offenstellung überführbar. Dazu wird parallel oder nach dem Entsperren des Gesperres über eine Steuerleitung 13 die Antriebseinheit 6 angesteuert.

Kommt es nun im Kraftfahrzeug 1 zu einem Spannungsabfall, so kann dieser Spannungsabfall durch den Steuereinheit 7 des Kraftfahrzeugs 1 erkannt werden. Über die Steuerleitung 14 kann nun die extern zugängliche Stromversorgung, beispielsweise eine Steckdose, freigegeben werden. Die Legitimierung des Mittels zur Notstromversorgung 8 erfolgt in diesem Ausführungsbeispiel über den Spannungsabfall im Kraftfahrzeug 1. Wurde der Spannungsabfall detektiert und die extern zugängliche Stromversorgung 8 aktiviert, so kann eine externe Spannungsquelle 15 über zum Beispiel eine Kabelverbindung 16 mit der Steckdose 8 des Kraftfahrzeugs 1 verbunden werden. Die externe Stromversorgung 8 ist nun in der Lage, entweder über die Steuerleitung 14 die Steuereinheit 7 mit einer Spannung zu versorgen, so dass über die Steuerleitungen 12, 13 das Türschloss 5 und die Antriebseinheit 6 mit einer Spannung bzw. einem Strom versorgbar sind oder die Stromversorgung 8 leitet selbst über separate Steuerleitungen 17, 18 eine entsprechende Spannung an das Türschloss 5 bzw. die Antriebseinheit 6. Das unmittelbare Ansteuern des Türschlosses 5 und der Antriebseinheit 6 über die Steuerleitungen 17, 18 kann beispielsweise dann erfolgen, wenn die externe Spannungsquelle selbst über eine Steuereinheit verfügt, wobei die externe Spannungsquelle beispielsweise ein Smartphone mit einer entsprechenden Software ist.

Erfindungsgemäß vorstellbar ist es auch, dass eine Legitim ierung über ein Crashsignal in der Steuereinheit 7 durchgeführt wird. Die Steckdose 8, die beispielsweise hinter einer Klappe einer Ladesteckdose angeordnet sein kann, wird dann aktiviert, so dass eine Spannungsquelle 15 die Aufstellvorrichtung 4 mit einer Spannung bzw. einem Strom versorgen kann. Die Legitimierung kann aber auch über ein Smartphone 10 erfolgen, wobei das Smartphone 10 der Steuereinheit 7 wiederum ein Steuersignal zusendet so dass die Steuereinheit 7 die externe Stromversorgung über die Steckdose 8 freischaltet. In jedem Fall wird gewährleistet, dass im Falle eines Spannungsabfalls über die extern zugängliche Stromversorgung 8 die Aufstellvorrichtung 4 aktivierbar und betreibbar ist.

### Bezugszeichenliste

- 1: Kraftfahrzeug
- 2: Seitenwand
- 3: Türelement
- 4: Aufstellvorrichtung
- 5: Türschloss
- 6: Antriebseinheit
- 7: Steuereinheit
- 8: extern zugängliche Stromversorgung, Steckdose
- 9: Schlosshalter
- 10: Funkfernbedienung, Smartphone
- 11: Funksignal
- 12, 13, 14, 17, 18: Steuerleitung
- 15: Spannungsquelle
- 16: Kabelverbindung

## Patentansprüche

1. Aufstellvorrichtung (4) für ein Kraftfahrzeugtürelement (3), insbesondere eine Seitentür (3), aufweisend ein elektrisch betätigbares Türschloss (5), eine elektrische Antriebseinheit (6), ein Stellmittel und eine Steuereinheit (7), wobei mittels der Steuereinheit (7) ein Betriebsmodus auswählbar ist, wobei ein Mittel zur Notstromversorgung (8) an der Aufstellvorrichtung (4) angeordnet ist, **dadurch gekennzeichnet, dass** mittels der Steuereinheit (7) die Notstromversorgung (8) mit der Aufstellvorrichtung (4) koppelbar ist und eine Legitimierung der Notstromversorgung (8) durchführbar ist.

2. Aufstellvorrichtung (4) nach Anspruch 1, **dadurch gekennzeichnet, dass** das Mittel zur Notstromversorgung (8) als extern zugängliche Stromversorgung (8) ausbildbar ist.

3. Aufstellvorrichtung (4) nach einem der Ansprüche 1 oder 2, **dadurch gekennzeichnet, dass** ein externer Zugang (8) im Bereich einer Klappe, bevorzugt einer Tankklappe oder einer Ladesteckdose, anordbar ist.

4. Aufstellvorrichtung (4) nach einem der vorangehenden Ansprüche, **dadurch gekennzeichnet, dass** die Legitimierung infolge eines Spannungsabfalls durchführbar ist.

5. Aufstellvorrichtung (4) nach einem der vorangehenden Ansprüche, **dadurch gekennzeichnet, dass** die Legitimierung mittels eines externen Steuergeräts (10), bevorzugt eines Smartphones (10), einer Smart Device, eines KeyFobs und/oder einer NFC-Karte, durchführbar ist.

6. Aufstellvorrichtung (4) nach einem der vorangehenden Ansprüche, **dadurch gekennzeichnet, dass** die Legitimierung mittels eines Crashsignals durchführbar ist.

7. Aufstellvorrichtung (4) nach einem der vorangehenden Ansprüche, **dadurch gekennzeichnet, dass** die Legitimierung mittels eines Lastschalters durchführbar ist.

8. Verfahren zum Aufstellen eines Kraftfahrzeugtürelements (3), insbesondere eines Türelements (3) ohne Türaußengriff, bei dem im Falle eines Stromabfalls eine Notstromversorgung (8) für eine Aufstellvorrichtung (4) gemäß einer der vorstehenden Ansprüche bereitgestellt wird und bei dem erst infolge einer Legitimierung ein Mittel zur Notstromversorgung (8) aktiviert wird.

## Claims

1. Opening device (4) for a motor vehicle door element (3), in particular a side door (3), having an electrically-actuatable door lock (5), an electrical drive unit (6), a setting means, and a control unit (7), wherein an operating mode can be selected by means of the control unit (7), wherein a means for emergency power supply (8) is provided at the opening device (4), **characterized in that**
by means of the control unit (7), the emergency power supply (8) can be coupled to the opening device (4) and the emergency power supply (8) can be legitimized.

2. Opening device (4) according to claim 1, **characterized in that** the means for emergency power supply (8) can be configured as an externally-accessible power supply (8).

3. Opening device (4) according to one of claims 1 or 2,
**characterized in that** an external access (8) can be arranged in the region of a flap, preferably a fuel filler flap or a charging socket.

4. Opening device (4) according to one of the preceding claims, **characterized in that** the legitimization can be carried out as a result of a voltage drop.

5. Opening device (4) according to one of the preceding claims,
**characterized in that** the legitimization can be carried out by means of an external control device (10), preferably a smartphone (10), a smart device, a key fob and/or an NFC card.

6. Opening device (4) according to one of the preceding claims,
**characterized in that** the legitimization can be carried out by means of a crash signal.

7. Opening device (4) according to one of the preceding claims,
**characterized in that** the legitimization can be carried out by means of a circuit breaker.

8. Method for opening a motor vehicle door element (3), in particular a door element (3) without an external door handle, in which method, in the event of a current drop, an emergency power supply (8) for an opening device (4) according to one of the preceding claims is provided and in which a means for emergency power supply (8) is activated only as a result of a legitimization.

## Revendications

1. Dispositif de mise en place (4) pour un élément formant porte de véhicule automobile (3), en particulier une porte latérale (3), présentant une serrure de porte (5) pouvant être actionnée électriquement, une unité d'entraînement électrique (6), un moyen de réglage et une unité de commande (7), dans lequel un mode de fonctionnement peut être sélectionné au moyen de l'unité de commande (7), dans lequel un moyen pour l'alimentation en courant de secours (8) est disposé au niveau du dispositif de mise en place (4), **caractérisé en ce que**
au moyen de l'unité de commande (7), l'alimentation en courant de secours (8) peut être couplée au dispositif de mise en place (4) et une légitimation de l'alimentation en courant de secours (8) peut être réalisée.

2. Dispositif de mise en place (4) selon la revendication 1,
**caractérisé en ce que** le moyen pour l'alimentation en courant de secours (8) peut être formé en tant qu'alimentation en courant (8) accessible depuis l'extérieur.

3. Dispositif de mise en place (4) selon l'une des revendications 1 ou 2, **caractérisé en ce qu'**un moyen d'accès externe (8) peut être disposé dans la zone d'un clapet, de préférence d'un clapet de réservoir ou d'une prise de charge.

4. Dispositif de mise en place (4) selon l'une des revendications précédentes, **caractérisé en ce que** la légitimation peut être réalisée suite à une chute de tension.

5. Dispositif de mise en place (4) selon l'une des revendications précédentes, **caractérisé en ce que** la légitimation peut être réalisée au moyen d'un appareil de commande externe (10), de préférence d'un mobile multifonction (10), d'un dispositif intelligent, d'un porte-clé et/ou d'une carte NFC.

6. Dispositif de mise en place (4) selon l'une des revendications précédentes, **caractérisé en ce que** la légitimation peut être réalisée au moyen d'un signal de collision.

7. Dispositif de mise en place (4) selon l'une des revendications précédentes, **caractérisé en ce que** la légitimation peut être réalisée au moyen d'un interrupteur à coupure en charge.

8. Procédé pour la mise en place d'un élément formant porte de véhicule automobile (3), en particulier d'un élément formant porte (3) sans poignée extérieure de porte, dans lequel, en cas de chute de courant, une alimentation en courant de secours (8) est fournie à un dispositif de mise en place (4) conformément à l'une des revendications précédentes et dans lequel un moyen pour l'alimentation en courant de secours (8) n'est activé que suite à une légitimation.
